# EUROPÄISCHE PATENTSCHRIFT

(11) **EP 1 744 579 B1**
(45) Veröffentlichungstag und Bekanntmachung des Hinweises auf die Patenterteilung: **19.03.2014**
(21) Anmeldenummer: 06001183.0
(22) Anmeldetag: 20.01.2006
(51) Int. Cl.: H04W 8/26

(54) **Verfahren zur Registrierung oder Deregistrierung funktionaler Nummern für Mobilstationen eines Funk-Kommunikationssystems**
Method of registering or deregistering functional numbers for the mobile stations of the radio communication system.
Méthode d'enregistrement ou d'annulation de numéros fonctionnels pour les stations mobiles d'un système de communication radio.

(30) Priorität: 13.07.2005 DE 102005033214
(43) Veröffentlichungstag der Anmeldung: 17.01.2007
(73) Patentinhaber: DB Netz AG, 60468 Frankfurt am Main (DE)
(72) Erfinder: Masur, Klaus-Dieter, 61476 Kronberg (DE)
(74) Vertreter: Zinken-Sommer, Rainer

(56) Entgegenhaltungen:
- EP-A- 0 952 744
- DE-A1- 19 942 607

## Beschreibung

Die Erfindung betrifft ein Verfahren zur Registrierung oder Deregistrierung funktionaler Nummern für Mobilstationen eines Funk-Kommunikationssystems unter Verwendung einer Konfigurations-Datenbank zur Zuordnung der funktionalen Nummern zu physikalischen Zielrufnummern.

Der Einsatz sog. "funktionaler Nummern" ist in einem nach dem GSM-R-Standard der europäischen Schienen-Infrastrukturunternehmen betriebenen Mobilfunknetz allgemein üblich. Im Gegensatz zu den physikalischen Rufnummern der einzelnen Endgeräte handelt es sich hierbei um logische Rufnummern, mit denen z.B. die Nutzer der Endgeräte (z.B. der Triebfahrzeugführer eines definierten Zuges) angesprochen werden können. Dies ist insofern vorteilhaft, da infolge wechselnder Dienstpläne die Identitäten der entsprechenden Mitarbeiter (bzw. die physikalischen Rufnummern von deren Endgeräten) fortlaufenden Änderungen unterworfen sind. Durch entsprechende Zuordnungen von physikalischen und logischen (bzw. "funktionalen") Nummern in einer Konkordanzliste (als Bestandteil einer Konfigurations-Datenbank) ist eine eindeutige Identifizierung möglich. Somit muss ein rufender Teilnehmer nur die funktionale Nummer (und nicht die physikalische Zielrufnummer) des gerufenen Teilnehmers kennen. Dieses ist aus betrieblichen Gründen im Eisenbahnbetrieb von Vorteil. Natürlich ergibt sich hieraus die Konsequenz, dass funktionale Nummern in der Konfigurations-Datenbank registriert bzw. deregistriert werden müssen. Dies kann beispielsweise bei Dienstantritt bzw. Dienstende eines Mitarbeiters der Fall sein.

Aus dem Stand der Technik (EP 952 744 A2) sind Mobilfunksysteme bekannt, bei denen für jede einzelne Registrierung bzw. Deregistrierung von funktionalen Nummern ein eigenständiger Datenaustausch zwischen der Konfigurations-Datenbank und dem die Registrierung bzw. Deregistrierung initiierenden Terminal erfolgt.

Es ist zwar auch in diesem Stand der Technik eine "globale" Deregistrierung vorgesehen, mit der die Deregistrierung aller zu einer physikalischen Rufnummer zugehörigen funktionaler Nummern mit nur einem Datenaustausch zwischen der Datenbank und dem die Deregistrierung initiierenden Terminal erfolgt. Allerdings ist für eine solche globale Deregistrierung eine explizite Signalisierung erforderlich, mit der das die Deregistrierung initiierende Terminal der Datenbank in dem dafür notwendigen einmaligen Datenaustausch den Wunsch nach einer globalen Deregistrierung übermittelt. Hierbei ist zum einen als nachteilig zu werten, dass sich auf diese Weise die in der Praxis ungleich wichtigere Registrierung aller zu einer physikalischen Rufnummer zugehörigen funktionaler Nummern nicht in identischer Weise mittels eines einzigen Datenaustausches zwischen der Datenbank und dem die Registrierung initiierenden Terminal durchführen lässt. Dies ist beispielsweise bei einem Wechsel der GSM-R-Netze bei grenzüberschreitendem Eisenbahnverkehr erforderlich. Zum anderen lässt die globale Deregistrierung keine Flexibilität in Bezug auf innere Abhängigkeiten zum Datenstring der ersten funktionalen Nummer zu.

Der Erfindung liegt die Aufgabe zugrunde, ein Verfahren zur Registrierung oder Deregistrierung funktionaler Nummern für Mobilstationen eines Funk-Kommunikationssystems unter Verwendung einer Konfigurations-Datenbank zur Zuordnung der funktionalen Nummern zu physikalischen Zielrufnummern anzugeben, welches alle Registrierungen bzw. Deregistrierungen in Bezug auf die zugehörige physikalische Rufnummer mittels eines einzigen Datenaustausches zwischen der Konfigurations-Datenbank und dem die Registrierung bzw. Deregistrierung initiierenden Terminal ermöglicht. Dabei sollen zum Zwecke einer vereinfachten Implementierung die für Registrierung und Deregistrierung anzuwendenden Verfahren identisch sein.

Diese Aufgabe wird in Verbindung mit dem Oberbegriff des Patentanspruches 1 erfindungsgemäß dadurch gelöst, dass von der Mobilstation eines zur Registrierung bzw. Deregistrierung berechtigten Teilnehmers eine erste funktionale Nummer an die Konfigurations-Datenbank übertragen und in der Konfigurations-Datenbank durch Einlesen dieser ersten funktionalen Nummer eine Folge von mindestens zwei Zuordnungsvorgängen generiert wird, wobei mittels eines mit der Konfigurations-Datenbank logisch verbundenen Erfassungsgerätes ein codiertes Datenelement aus dem Daten-String der ersten funktionalen Nummer zur Angabe des bei der Generierung der Folge heranzuziehenden Startwertes sowie der Regel zur Bildung der einzelnen Elemente der Folge von Zuordnungsvorgängen ausgelesen wird.

Auf diese Weise ist es möglich, in einer zentralen Instanz den Umfang der aktuell notwendigen Funktionskode-Folge zu bestimmen und das initiierende Terminal nach den erfolgten Registrierungen bzw. Deregistrierungen über die dazu benutzte Funktionskode-Folge zu informieren. Dem Terminal muss die Funktionskode-Folge im Vorfeld der Registrierungen bzw. Deregistrierungen nicht bekannt sein.

Die Konfigurations-Datenbank wird durch ein initiierendes Terminal darüber informiert, ob eine erfindungsgemässe datenbankintern generierte Folge von Registrierungen bzw. Deregistrierungen durchzuführen ist oder nicht.

Der Erfindungsgedanke wird in nachfolgendem Ausführungsbeispiel erläutert. Es zeigen:
- **Figur 1**: Schema einer funktionalen Registrierung gemäss dem Stand der Technik
- **Figur 2**: Schema einer funktionalen Deregistrierung gemäss dem Stand der Technik
- **Figur 3**: Schema einer funktionalen Registrierung bei vorkonfigurierter Datenbank

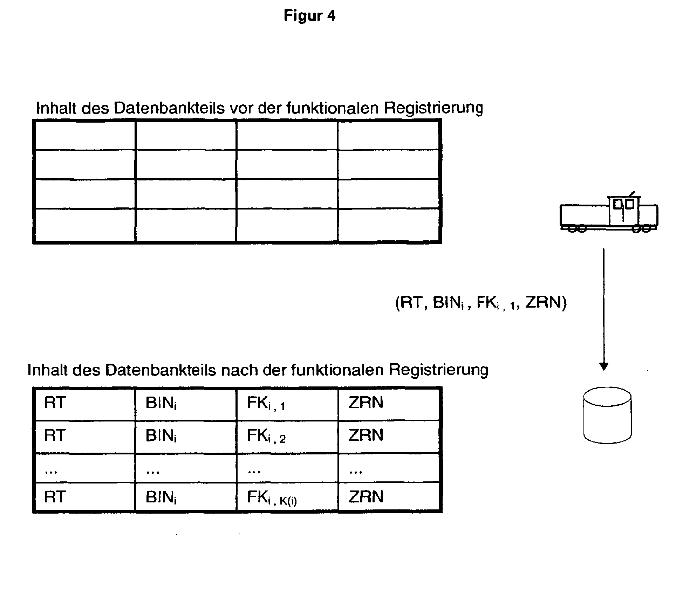

- **Figur 4**: Schema einer funktionalen Registrierung bei nicht-vorkonfigurierter Datenbank

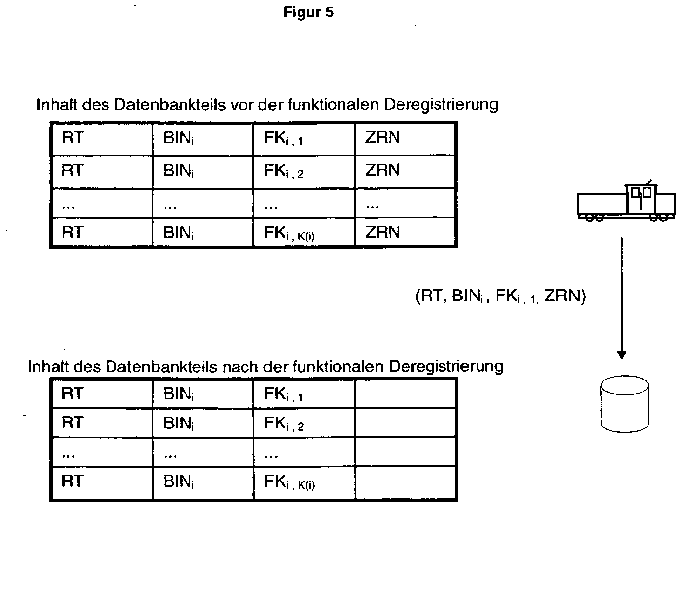

- **Figur 5**: Schema einer funktionalen Deregistrierung bei vorkonfigurierter Datenbank

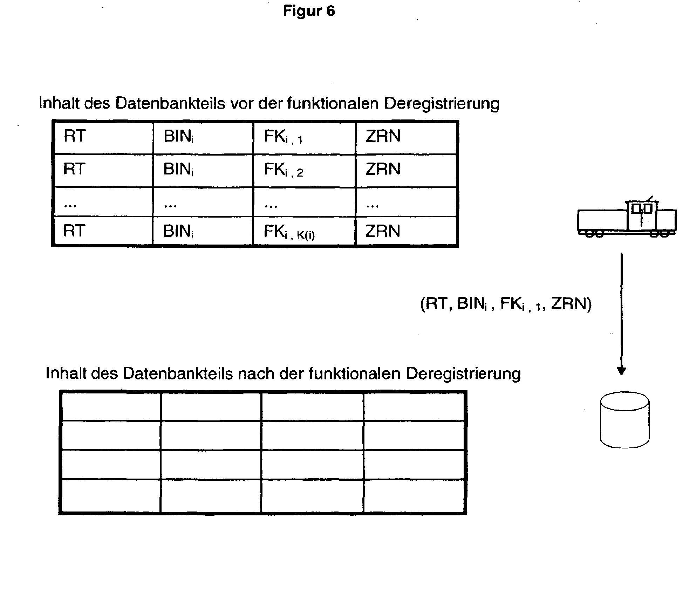

- **Figur 6**: Schema einer funktionalen Deregistrierung bei nicht-vorkonfigurierter Datenbank

Die zur Anwendung kommenden funktionalen Nummern bestehen üblicherweise aus einem Ruftyp (RT) (z.B. Zugnummernruftyp), der Benutzeridentifikationsnummer (BIN) (z.B. Zugnummer) und dem Funktionskode (FK) (z.B. "01" für den Triebfahrzeugführer). Sie dienen beispielsweise der funktionalen Adressierung der auf den Zügen eingesetzten Dienstpersonale. In einer Konfigurations-Datenbank werden funktionale Nummern auf eine physikalische Zielrufnummer (ZRN) - z.B. MSISDN (Mobile Station International ISDN Number) - abgebildet, zu der ein Gespräch vermittlungstechnisch aufgebaut wird.

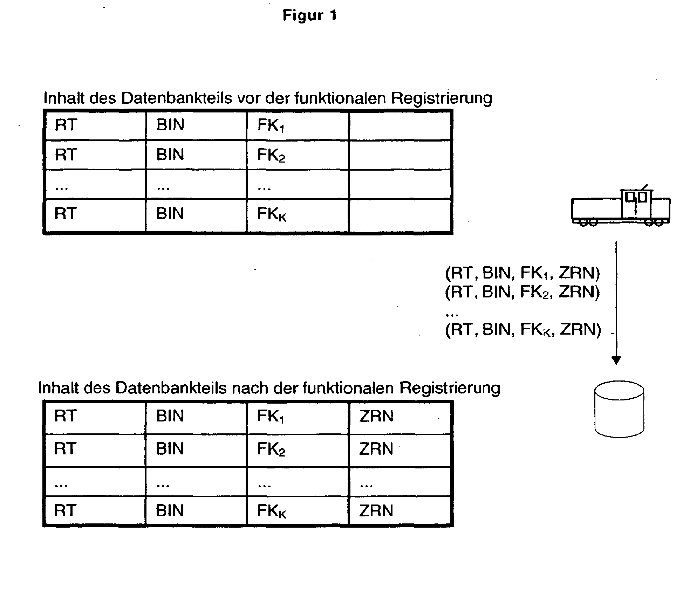

Bei der gemäss dem bekannten Stand der Technik ausgestalteten funktionalen Registrierung sind gemäss Figur 1 die funktionalen Rufnummern (RT, BIN, FK₁), (RT, BIN, FK₂) bis (RT, BIN, FK_{K}) in einer Konfigurations-Datenbank vorzukonfigurieren, wobei K die jeweilige maximale Anzahl der einer einzelnen Zugnummer (BIN) zugehörigen Betriebspersonen (Triebfahrzeugführer, Kundenbetreuer, Bordtechniker etc...) ist. Vom Terminal eines für die Durchführung der Zuordnungsvorgänge berechtigten Teilnehmers werden in sequentieller Weise K Dateneinheiten zur Datenbank gesendet. Jede Dateneinheit enthält den Ruftyp (RT), die Zugnummer (BIN), den jeweiligen Funktionskode (FKᵢ wobei 1≤i≤K) sowie eine Information, z.B. die IMSI (International Mobile Subscriber Identity), aus der die physikalische Zielrufnummer (ZRN) im GSM-R-Mobilfunknetz abgeleitet werden kann. Die einzelnen Übertragungen unterscheidet sich dabei jeweils nur im jeweiligen Funktionskode (FK). In der Datenbank werden diesen einzelnen funktionalen Nummern jeweils die identische Zielrufnummer (ZRN) zugeordnet. Das die Registrierung initiierende Terminal wird sodann sequentiell über das Ergebnis jeder einzelnen Registrierung informiert. Beispielsweise würde im Falle eines Grenzübertrittes - d.h. beim Wechsel von einem ersten zu einem weiteren Mobilfunknetz - das CabRadio auf dem führenden Triebfahrzeug die Registrierung der dem Zug zugehörigen funktionalen Nummern in der Konfigurations-Datenbank des neuen Mobilfunknetzes veranlassen. Ein analoger Anwendungsfall ist im erstmaligen Einbuchen eines unter einer neuen bzw. geänderten Zugnummer geführten Zuges in einem Mobilfunknetz zu sehen.

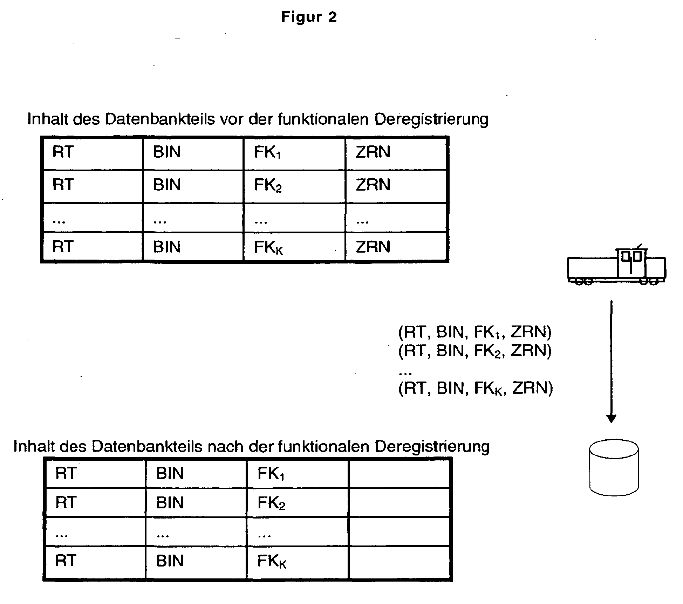

Bei der aus dem Stand der Technik bekannten funktionalen Deregistrierung sind gemäss Figur 2 die funktionalen Nummern (RT, BIN, FK₁), (RT, BIN, FK₂) bis (RT, BIN, FK_{K}) - wobei K die jeweilige maximale Anzahl von zu einer BIN zugehörigen Funktionskodes darstellt - in einer Datenbank jeweils einer identischen Zielrufnummer (ZRN) zugeordnet. Vom Terminal eines zur Durchführung der Deregistrierung berechtigten Teilnehmers werden sequentiell K Dateneinheiten zur Konfigurations-Datenbank gesendet. Jede Dateneinheit enthält dabei den Ruftyp (RT), die Zugnummer (BIN), den jeweiligen Funktionskode (FKᵢ, wobei 1≤i≤K) sowie eine Information, aus der die Zielrufnummer (ZRN) im GSM-R Mobilfunknetz abgeleitet werden kann. Auch hier unterscheiden sich die einzelnen Übertragungen bezüglich des Funktionskodes (FK). In der Konfigurations-Datenbank werden in den Datensätzen (RT, BIN, FK₁), (RT, BIN, FK₂),... (RT, BIN, FK_{K}) jeweils die Zielrufnummern (ZRN) entfernt. Das die Deregistrierung initiierende Terminal wird sodann sequentiell über das Ergebnis jeder einzelnen Deregistrierung informiert. Die bisherige Registrierungs- bzw. Deregistrierungsmethode ist übertragungstechnisch ineffizient und benötigt eine relativ lange Zeit, welches insbesondere für den grenzüberschreitenden Zugverkehr von Nachteil ist, da dieser insbesondere eine schnelle funktionale Registrierung beim Grenzübertritt in dem jeweiligen Ursprungsnetz erfordert.

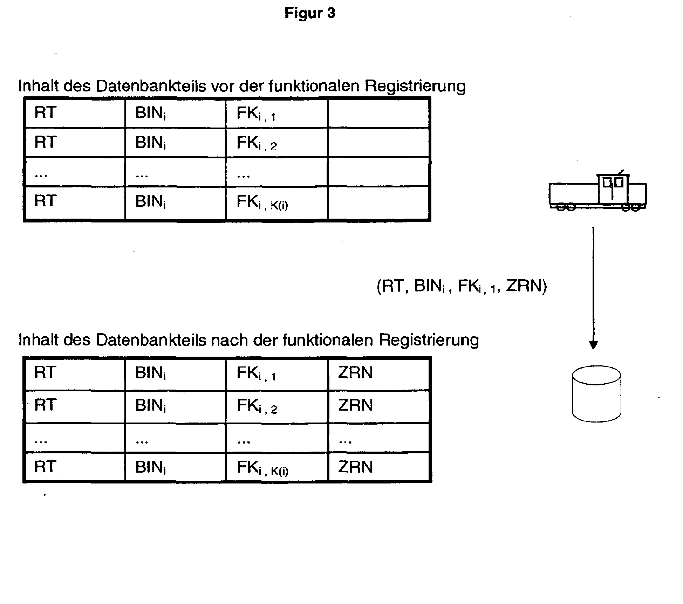

Um die funktionale Registrierung übertragungstechnisch effizienter zu gestalten und die dazu benötigte Zeit zu reduzieren wird gemäss Figur 3 vom Terminal des hierzu berechtigten registrierenden Teilnehmers neben dem Ruftyp (RT), der Zugnummer (BINᵢ) sowie einer Information, aus der die ZRN im GSM-R Mobilfunknetz abgeleitet werden kann (z.B. die IMSI [International Mobile Subscriber Identity]), nur ein erster Funktionskode FK_{i,1} einmalig in einer Dateneinheit an die Konfigurations-Datenbank übertragen. Die Folge der Funktionskodes FKᵢ₂, ..., FK_{i,K(i)} wird während der Datenbank-Vorkonfiguration, bei der die funktionalen Nummern im Vorfeld der Registrierung einmalig in der Konfigurations-Datenbank mittels eines mit der Konfigurations-Datenbank verbundenen Gerätes einzubringen und in dieser zu speichern sind, bzw. nach Empfang der vom Terminal des berechtigten registrierenden Teilnehmers gesendeten Dateneinheit in der Datenbank erzeugt. Sie ist nicht nur vom ersten Funktionskode FK_{i,1} in der Funktionskode-Folge abhängig, sondern auch von der Kategorie i der Benutzeridentifikationsnummer BIN. Falls es zweckmässig erscheint, kann auch eine Abhängigkeit von einer Ruftyp-Kategorie vorgesehen werden. Diese Abhängigkeiten werden in der Konfigurations-Datenbank zur Erzeugung der Funktionskode-Folge benutzt. Die Kategorie i der Benutzeridentifikationsnummer lässt sich beispielsweise anhand eines definierten Nummernschemas aus der Benutzeridentifikationsnummer bestimmen (z.B. anhand einer an bestimmter Stelle des Datenstringes stehenden Kennziffer, einem definierten Nummernbereich oder der Länge der Ziffernfolge). K(i) ist die Anzahl von Funktionskodes (FK) für die Kategorie i der BIN und ist FK_{i,1} abhängig, sowie - falls notwendig - zusätzlich abhängig vom Ruftyp (RT). Das die Registrierung initiierende Terminal wird mittels einer einzigen übertragenen Dateneinheit über das Ergebnis der Registrierungen Funktionskode-spezifisch informiert.

In analoger Weise wird zur übertragungstechnisch effizienteren Gestaltung der funktionalen Deregistrierung vom Terminal des berechtigten deregistrierenden Teilnehmers der Ruftyp (RT), die Benutzeridentifikationsnummer (BINᵢ), der Funktionscode (FK_{i,1}) sowie eine Information, aus der die physikalische Zielfrufnummer (ZRN) im GSM-R Mobilfunknetz abgeleitet werden kann, einmalig in einer Dateneinheit an die Konfigurations-Datenbank übertragen. Die Funktionskode-Folge FKᵢ₂, ..., FK_{i,K(i)} wird nach Empfang der einen übertragenen Dateneinheit in der Konfigurations-Datenbank erzeugt. Sie ist nicht nur vom ersten Funktionskode FK_{i,1} in der Funktionskode-Folge abhängig, sondern auch von der Kategorie i der Benutzeridentifikationsnummer BIN. Falls es zweckmässig erscheint, kann auch eine Abhängigkeit von einer Ruftyp-Kategorie vorgesehen werden. Diese Abhängigkeiten werden in der Konfigurations-Datenbank zur Erzeugung der Funktionskode-Folge benutzt. BINᵢ ist die BIN (z.B. Zugnummer) der Kategorie i. Die BIN-Kategorie i lässt sich aus der BIN ableiten (z.B. anhand einer Ziffer an einer bestimmten Stelle, dem zugehörigen Nummernbereich oder deren Länge). K(i) ist die Anzahl von Funktionskodes (FK) für die Kategorie i der BIN und ist FK_{i,1}-abhängig sowie, falls notwendig, zusätzlich abhängig von RT. Falls nicht nach BIN-Kategorien unterschieden wird, gilt: BINᵢ=BIN, FK_{i,j} =FKⱼ und K(i)=K.

In einem vorkonfigurierten Teil der Datenbank werden für (RT, BINᵢ, FK_{i,1}), (RT, BINᵢ, FK_{i,2}),... (RT, BINᵢ, FK_{i,K(i)}) jeweils die ZRN entfernt. Im nicht-vorkonfigurierten Teil der Datenbank werden für (RT, BINᵢ, FK_{i,1}), (RT, BINᵢ, FK_{i,2}),... (RT, BINᵢ, FK_{i,K(i)} jeweils (RT, BINᵢ, FK_{i,1}, ZRN), (RT, BINᵢ, FK_{i,2}, ZRN),... (RT, BIN_{i,} FK_{i,K(i)}, ZRN) entfernt. Das die Deregistrierung initiierende Terminal wird mittels einer übertragenen Dateneinheit über das Ergebnis der Deregistrierungen Funktionskode-spezifisch informiert.

## Patentansprüche

1. Verfahren zur Registrierung oder Deregistrierung funktionaler Nummern für Mobilstationen eines Funk-Kommunikationssystems unter Verwendung einer Konfigurations-Datenbank zur Zuordnung der funktionalen Nummern zu physikalischen Zielrufnummern,
**dadurch gekennzeichnet, dass**
von der Mobilstation eines zur Registrierung bzw. Deregistrierung berechtigten Teilnehmers eine erste funktionale Nummer an die Konfigurations-Datenbank übertragen und in der Konfigurations-Datenbank durch Einlesen dieser ersten funktionalen Nummer eine Folge von mindestens zwei Zuordnungsvorgängen generiert wird, wobei mittels eines mit der Konfigurations-Datenbank logisch verbundenen Erfassungsgerätes ein codiertes Datenelement aus dem Daten-String der ersten funktionalen Nummer zur Angabe des bei der Generierung der Folge heranzuziehenden Startwertes sowie der Regel zur Bildung der einzelnen Elemente der Folge von Zuordnungsvorgängen ausgelesen wird.

## Claims

1. A method for the registration or deregistration of functional numbers for mobile stations of a radio communications network using a configuration database to assign the functional numbers to physical destination call numbers,
**characterized in that**
a first functional number is transferred to the configuration database from the mobile station of a subscriber entitled to register or deregister and a sequence of at least two assignment processes is generated in the configuration database by reading in this first functional number, wherein by means of a recording device logically connected to the configuration database a coded data element is read out from the data string of the first functional number to indicate the initial value to be used when generating the sequence and also the rule for creating the individual elements of the sequence of assignment processes.

## Revendications

1. Procédé pour l'enregistrement ou la suppression d'enregistrement de numéros fonctionnels pour des stations mobiles d'un système de communication radio en utilisant une banque de données de configuration pour l'affectation des numéros fonctionnels à des numéros d'appel cibles physiques,
**caractérisé en ce que**
la station mobile d'un participant autorisé à l'enregistrement ou la suppression d'enregistrement transmet un premier numéro fonctionnel à la banque de données de configuration et **en ce que** l'on génère, dans la banque de données de configuration, par récupération de ce premier numéro fonctionnel, une série d'au moins deux processus d'affectation, moyennant quoi on lit, à l'aide d'un appareil de saisie en liaison logique avec la banque de données de configuration, un élément de données codé dans la chaîne de données du premier numéro fonctionnel afin d'indiquer la valeur de démarrage à prendre en compte lors de la génération de la série ainsi que la règle pour la formation des éléments individuels de la série de processus d'affectation.
